# EUROPÄISCHE PATENTSCHRIFT

(11) **EP 2 682 193 B1**
(45) Veröffentlichungstag und Bekanntmachung des Hinweises auf die Patenterteilung: **03.01.2018**
(21) Anmeldenummer: 13003418.4
(22) Anmeldetag: 06.07.2013
(51) Int. Cl.: B05B 11/00, B65D 81/32, B65D 83/52, B65D 83/68

(54) **Spender**
Dispenser
Distributeur

(30) Priorität: 06.07.2012 DE 202012006466 U
(43) Veröffentlichungstag der Anmeldung: 08.01.2014
(73) Patentinhaber: Brugger, Gerhard, 6600 Pflach (AT)
(72) Erfinder: Brugger, Gerhard, 6600 Pflach (AT)
(74) Vertreter: Bockhorni & Kollegen

(56) Entgegenhaltungen:
- DE-U1-202010 011 715
- JP-A- 2010 005 537
- US-A- 3 303 970

## Beschreibung

Die Erfindung betrifft einen Spender für die Abgabe einer aus wenigstens zwei Komponenten bestehenden Substanz mit den oberbegrifflichen Merkmalen des Anspruchs 1, wie in US 3,303,970 beschrieben. Aus der EP 1 104 336 ist ein Dosierspender bekannt, bei dem das Mischungsverhältnis zweier pastöser oder flüssiger Komponenten stufenlos einstellbar ist. Der Dosierspender stellt für den Verbraucher, der das Mischungsverhältnis der Komponenten selbst wählen und auf seine persönlichen Bedürfnisse der gemischten Komponenten abstimmen kann, eine erhebliche Erleichterung dar. Im Dosierspender sind dabei zwei Kartuschen mit zugeordneten Pumpeinheiten vorgesehen, die über ein schwenkbares Übertragungselement, dessen Schwenkachse relativ zu den Pumpen verstellbar ist, betätigt werden.

Nachteilig an dem bekannten Dosierspender ist, dass die Betätigung eine axiales Drücken verlangt und damit nicht immer den Bedürfnissen des Benutzers entspricht, der für bestimmte Produkte eine Drehbewegung bzw. eine seitliche Betätigung bevorzugt. Zudem dient das Übertragungselement an dem bekannten Dosierspender gleichzeitig zur Einstellung des Mischungsverhältnisses der Komponenten. Bei einem Ausfall des Übertragungselementes kann somit keine Entnahme mehr aus dem Dosierspender erfolgen. Zudem ist aufgrund der Doppelfunktion des Übertragungselementes dessen Aufbau und Montage relativ kompliziert und vom Produktdesign eingeschränkt.

Daher liegt der vorliegenden Erfindung die Aufgabe zugrunde, die Nachteile des Standes der Technik zu überwinden und einen Spender zur Verfügung zu stellen, der eine konstruktiv einfache und anwenderfreundliche Einstellvorrichtung für das Mischungsverhältnis und für die Betätigung des Dosierspenders aufweist.

Diese Aufgabe wird durch einen Spender mit den Merkmalen des Anspruchs 1 gelöst. Vorteilhafte Weiterbildungen der Erfindung sind Gegenstand der abhängigen Ansprüche.

Erfindungsgemäß wird ein Spender für die Abgabe einer aus wenigsten zwei Komponenten bestehenden Substanz zur Verfügung gestellt, wobei der Spender wenigstens zwei Behälter für die Aufnahme der Komponenten der Substanz umfasst. Die Behälter können dabei nach Art von Kartuschen, d.h. mit starrem Mantel, aber auch als elastische Flaschen oder Beutel ausgebildet sein. Hierdurch wird eine lösbare, den Austausch der Kartuschen und deren Bewegung bzw. Verschiebung im Spender während des Dosier- bzw. Abgabevorganges ermöglicht. Die jeweilige Gestaltung der Behälter richtet sich auch nach der Viskosität der Komponenten. Weiterhin ist an jedem der Behälter eine Pumpeinheit angeordnet, über die eine Entnahme der jeweiligen Komponenten erfolgt. Die Pumpeinheiten können dabei als Kolbenpumpe, als Balgpumpe oder in einer sonstigen geeigneten Bauweise ausgeführt werden. Der Spender umfasst zudem eine Einstelleinrichtung, mit der das Mengenverhältnis der Komponenten der zu dosierenden Substanz einstellbar ist, sowie eine bewegliche Betätigungseinrichtung für die Pumpeinheit und eine Spenderdüse für die vom Spender abgegebene Substanz.

Der Spender ist dadurch gekennzeichnet, dass benachbart bzw. im Kontakt zur Einstelleinrichtung rampenförmig ausgebildete Keilelemente angeordnet sind. Durch die Keilelemente wird eine Übersetzung geschaffen, so dass die Betätigungskräfte gering sind. Als Einstelleinrichtung ist bevorzugt ist ein um die Hochachse drehbarer, wendelartiger oder treppenartig abgestufter Keilring vorgesehen, der gut zugänglich bevorzugt am oberen Ende des Dosierspenders angeordnet ist. Der drehbare Keilring kann dabei bevorzugt drehbar an der insbesondere hülsenförmigen Betätigungseinrichtung gelagert sein, so dass sich eine kompakte, einfache Bauweise ergibt. Dabei ist die Wendel- oder Stufenfläche der Einstelleinrichtung den Behältern oder den Pumpeinheiten zugewandt, wobei die Dosiereinstellung (außer bei 50:50) durch einen unterschiedlichen Anstellwinkel der Keilelemente zu den Behältern bzw. Pumpeinrichtungen besteht. Die Einstellung des Mischungsverhältnisses der Komponenten erfolgt hierbei durch die Veränderung der Anstellwinkel der Keilelemente mit den an den Pumpeinheiten bzw. Behältern anliegenden Flächen der Keilelemente. Durch diese Ausformung wird der Hub der Pumpeinheiten und damit die Menge der über die jeweiligen Pumpeinheit geförderten Komponente verändert. Die beiden Komponenten können vermischt, insbesondere in einem Applikator nach der WO 2006/11273 des Anmelders oder ggf. auch unvermischt ausgetragen werden.

Der erfindungsgemäße Spender hat im Vergleich zu dem eingangs beschriebenen Dosierspender einen verbesserten Aufbau, da die Einstelleinrichtung als gesonderte, einfach ausgeführte Einheit ausgebildet ist, die zudem präzise einstellbar ist. Weiterhin kann die Betätigung des Dosierspenders durch die Keilelemente seitlich oder drehbar ausgeführt werden. Neben einer unmittelbaren Beaufschlagung der Pumpeinheiten durch die Keilelemente und der Betätigungseinrichtung besteht insbesondere auch die Möglichkeit, die Pumpeinheiten feststehend im Spender anzuordnen und über die Keilelemente bzw. die Betätigungseinrichtung eine Beaufschlagung der Behälter durchzuführen, die dann mit dem jeweils eingestellten Hub in die Pumpeinheiten gedrückt werden, wobei die Abgabe einer entsprechend dem Mischungsverhältnis definierten Komponentenmenge erfolgt.

In einer vorteilhaften Ausführung ist vorgesehen, dass das Gehäuse des Dosierspenders bzw. dessen äußerer Mantel als Fführung für die Betätigungseinrichtung dient, die mit je einem Filmscharnier die beiden Keilelemente mitdreht und damit die (unteren) Keilflächen gegen die Behälter bzw. Pumpen drückt. Bevorzugt ist die Einstelleinrichtung oberhalb der Betätigungseinrichtung gut greifbar und drehbar ausgebildet, so dass die Einstelleinrichtung gut zugänglich ist. Dabei ist bevorzugt eine Riffelung Umfang vorgesehen, wodurch das Verdrehen der Einstelleinrichtung feinfühlig erfolgen kann. Zweckmäßig ist es hierbei, wenn die Einstelleinrichtung stufenlos drehbar ausgebildet ist oder aber eine Vielzahl von Rastpositionen zur definierten Verdrehung der Einstelleinrichtung aufweist. Bei der Ausgestaltung mit stufenloser Verdrehung der Einstelleinrichtung kann eine freie Wahl des Mischungsverhältnisses erfolgen. Bei der genannten Definition von Rastpositionen werden einstellbare Mischungsverhältnisse vorgegeben, wobei die Anzahl an Rastpositionen an die gewünschte Auflösung des Mischungsverhältnisses angepasst ist (z. B. um jeweils 2% oder 5% verändert).

Weitere Vorteile, Merkmale und Besonderheiten der Erfindung ergeben sich aus der nachfolgenden Beschreibung bevorzugter Ausführungsformen der Erfindung anhand der schematischen Zeichnungen. Es zeigen:
Fig. 1A, 1B eine Darstellung des erfindungsgemäßen Spenders mit Einstelleinrichtung und zugeordneter Betätigungseinrichtung, einmal in unbetätigter Stellung und einmal in Betätigungsstellung der Pumpeinheiten,
Fig. 2 eine Prinzipdarstellung der Einstelleinrichtung in verschiedenen Einstellpositionen (links mit 50: 50 und rechts mit z.B. 99:1-Verhältnis);
Fig. 3 vier weitere Darstellungen der Einstelleinrichtung mit zwei Perspektiven und Drauf- und Unteransicht auf die Keilelemente und das damit verbundene Betätigungselement;
Fig. 4 eine Seitenansicht des oberen Teils des Dosierspenders mit drehbarem Einstellelement und nicht dargestellten Betätigungselement, wobei oben der unbetätigte und unten der betätigte Dosierspender dargestellt ist
Fig. 5A, 5B ein weiteres Ausführungsbeispiel des Dosierspenders, der hier aber ohne Gehäuse dargestellt ist, wobei ein abgewandeltes Betätigungselement in Form eines Ziehgriffes in Fig. 5B angedeutet ist.

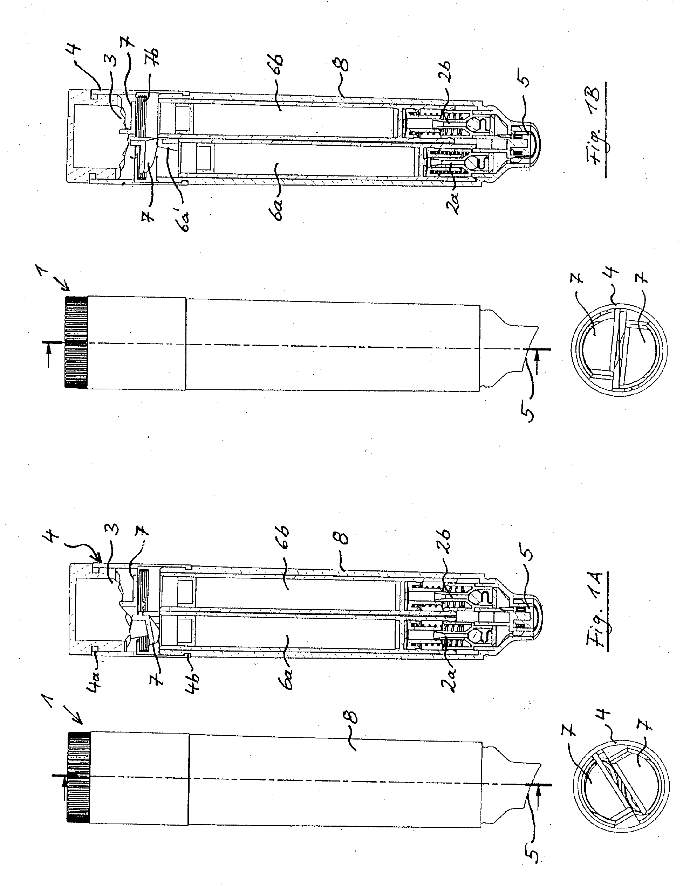

In Fig. 1A und 1B ist ein zylinderförmiger Spender 1 gezeigt, wobei Fig. 1A die unbetätigte und Fig. 1B die betätigte Position darstellt. Hierbei ist jeweils die Gesamtansicht mit Schnittlinie, die entsprechende Schnittdarstellung rechts daneben und darunter ein Querschnitt in Höhe der hier wesentlichen Keilelemente 7 gezeigt, wobei die Einstellung der Mischung durch Verdrehen der hier oben angeordneten Einstelleinrichtung 3 erfolgt. Die Einstelleinrichtung 3 ist im Ausführungsbeispiel in Art einer Hülse mit treppenartigen Stufen an ihrer Unterseite ausgeführt. Die Keilelemente 7 werden mit der Betätigungseinrichtung 4 zu den hier untenliegenden Pumpeinheiten 2a, 2b gepresst, wobei die Druckübertragung über die im Gehäuse 8 verschiebbar gelagerten Behälter 6a und/oder 6b und zugeordnete Stößel 6a' und 6b' erfolgt, an denen die Keilelemente 7 (genauer deren nach unten gerichteten Flächen) anliegen. Beim Verdrehen der hülsenförmigen Betätigungsvorrichtung 4 um die Hochachse (entsprechend der in Fig. 1 gezeigten Schnittlinie), z. B. um 120° werden die innerhalb der Betätigungseinrichtung 4 schwenkbar gelagerten Keilelemente 7 ebenfalls mitverdreht, wie aus dem Vergleich der beiden Querschnitte in Fig. 1A und 1B erkennbar ist. Die hier hülsenförmige Betätigungseinrichtung 4 wird durch eine Rückstellfeder 7b stets wieder in ihre Ausgangsposition zurückgedreht. Am oberen Ende der Betätigungseinrichtung 4 ist die Einstelleinrichtung 3 an einer Nut 4a drehbar fixiert, während eine ähnliche Nut 4b am unteren Ende der Betätigungseinrichtung 4 zum Gehäuse 8 hin vorgesehen ist.

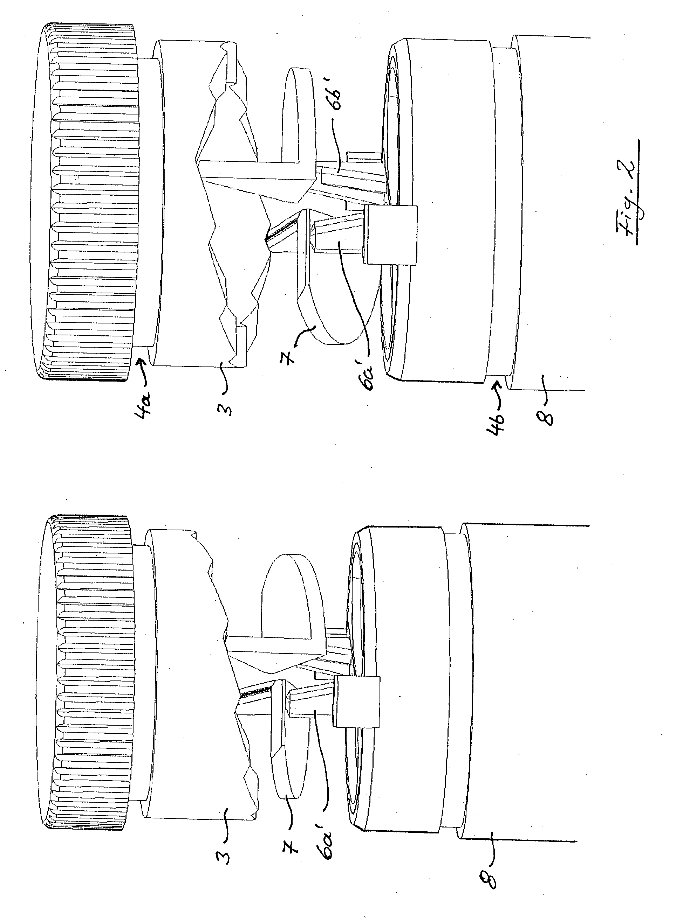

Durch dieses Zusammenwirken mit den um die Hochachse drehbaren Keilelementen 7 (vgl. die unterschiedlichen Positionen in den Draufsichten in Fig. 1A und 1B) erfolgt ein unterschiedlicher Pumphub durch unterschiedliche Anstellwinkel der Keilelemente 7, welche durch die Einstelleinrichtung 3 vorgegeben sind. Die abzugebende Substanz tritt dann an der hier unteren Spenderdüse 5 (hier mit Durchmischung) aus. Beim Betätigen der Betätigungseinrichtung 4 (hier durch Verdrehen um z.B. 120°) wird nur die in Fig. 1B linke Pumpeinheit 2a durch das steil stehende linke Keilelement 7 aktiv. Hierdurch hat die Pumpeinheit 2a einen Hub oder ein Fördervolumen von z. B. 99% der Gesamtmenge. Die hier rechte Pumpeinheit 2b, welche nicht mit einer Kraft beaufschlagt wird, da das rechte Keilelement 7 mit sehr flachem Anstellwinkel oder nahezu horizontal ausgerichtet ist (vgl. auch Fig. 2, rechts) und somit nur einen Hub- oder ein Fördervolumen von 1% (bezogen auf die Gesamtausgabemenge) liefert. Die Austragsmenge enthält daher im wesentlichen nur Bestandteile der von der Pumpeinheit 2a geförderten Komponente. Wird die Einstelleinrichtung 3 beispielsweise um 90° gegenüber der in Fig. 1B gezeigten Position gedreht, nimmt die Einstelleinrichtung 3 die Lage gemäss Fig. 2, links ein. Durch diese Einstellung ist der Anstellwinkel der beiden Keilelemente 7 identisch, so dass ein Dosierverhältnis von 50%/50% entsteht.

In der Position gemäss Fig. 2, rechts liegt das linke Keilelement 7 an der tiefsten Stelle der Einstelleinrichtung 3 an, so dass die am Stößel 6a' anliegende Fläche des Keilelements 7 sehr steil steht, während das andere, hier rechte Keilelement 7 am Stößel 6b' sehr flach anliegt. Damit führt nun (bei Verdrehen der hier aus Gründen der Übersichtlichkeit weggelassenen Betätigungseinrichtung 4 in Hülsenform) die zugeordnete Pumpeinheit 2a einen großen Hub durch (Fördervolumen nahezu 100 %), während die rechte Pumpeinheit 2b (vgl. Fig. 1B) praktisch keinen Hub durchführt oder ein Fördervolumen von 0% hat. Die Austragsmenge enthält daher nur Bestandteile der von der Pumpeinheit 2a aus dem Behälter 6a geförderten Komponente.

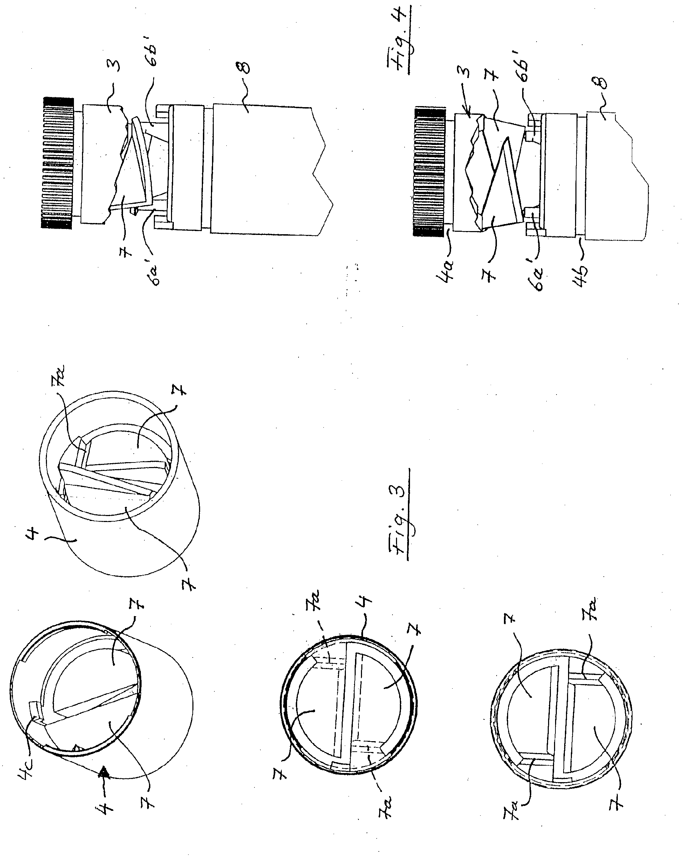

Bei einer Verdrehung der Einstelleinrichtung 3 ausgehend von dieser Position um 90° in eine Mittelstellung (wie in Fig. 2, links) wird eine "symmetrische" Ausrichtung der Einstelleinrichtung 3 wie in Fig. 4 erhalten, wobei dort oben die unbetätigte Stellung und unten die Pumpstellung dargestellt ist. In dieser Mittelstellung ist die Neigung oder der Anstellwinkel der Keilelemente 7 zu beiden Pumpeinheiten 2a und 2b bzw. hier den Stößeln 6a' und 6b' gleich. Somit werden beide Behälter 6a und 6b um den gleichen Weg axial nach unten gedrückt, so dass beide untenliegenden Pumpeinheiten 2a, 2b einen identischen Hub oder ein Fördervolumen von je 50% der Gesamtausgabemenge haben. Die Mischung enthält somit gleiche Teile der beiden Komponenten. Bei Zwischenpositionen der Einstelleinrichtung 3 zwischen den vorstehend genannten Stellungen ergeben sich entsprechende Zwischenverhältnisse zwischen den Hüben oder Fördervolumina der Pumpeinheiten 2a, 2b, so dass diese für jede Komponente zwischen 0%:100% und 100%:0% stufenlos veränderbar sind.

Fig. 3 zeigt oben zwei Perspektivdarstellungen der Keilelemente7, die hier innerhalb des Betätigungselements 4 mittels Filmscharnieren 7a gelagert sind. Dies ist insbesondere aus den hier links dargestellten Drauf- bzw. Unteransichten erkennbar. Die Filmscharniere 7a der beiden im Querschnitt L-förmig gestalteten Keilelemente 7 liegen sich hierbei gegenüber, um somit die (unterschiedlich geneigten) Positionen gegenüber der Einstelleinrichtung 3 einzunehmen (vgl. Fig. 4). Das in Fig. 3 dargestellte Bauteil ist bevorzugt als einstückiges und damit kostengünstiges Spritzgussteil hergestellt, das zudem mit einer (hier links oben gezeichneten) Rastverbindung 4c an den Nuten 4a bzw. 4b einfach zu montieren ist (vgl. Fig. 1A in montierter Stellung). Es sei darauf hingewiesen, dass in Fig. 4 zur Darstellung des "Innenlebens" der Betätigungseinrichtung 4 deren Außenmantel weggelassen ist.

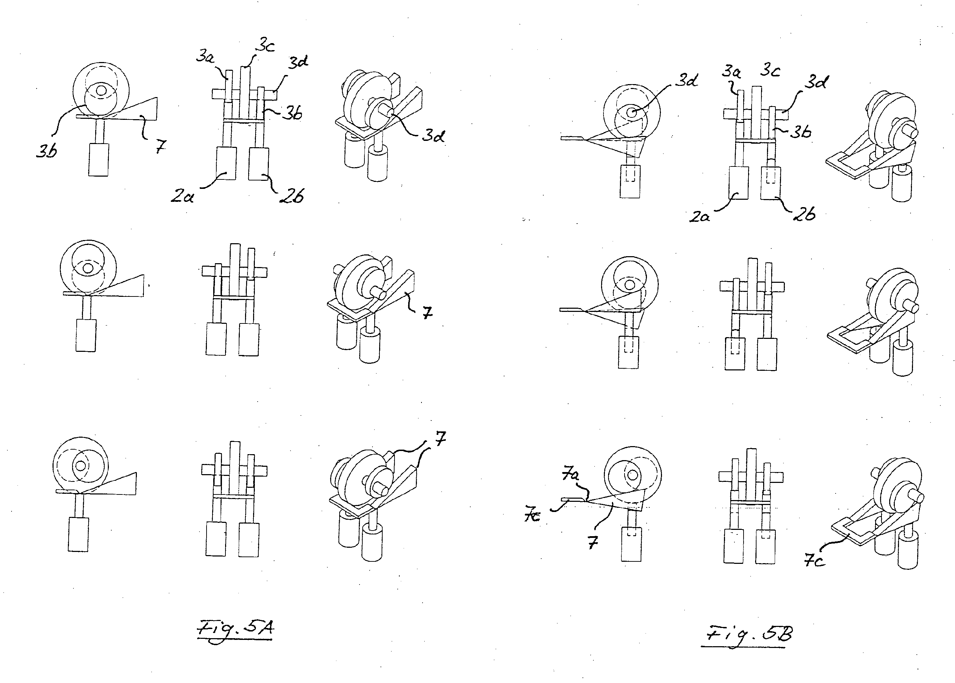

In Fig. 5A und 5B ist ein abgewandeltes Ausführungsbeispiel gezeigt, bei dem die Pumpeinheiten 2a, 2b unmittelbar an den Keilelementen 7 anliegen, also die Pumpbetätigung nicht mehr indirekt über die verschiebbaren Behälter 6a und 6b erfolgt. Zudem sind die Keilelemente 7 im Gegensatz zu der rotatorischen Bewegung in Fig. 1 bis 4 hier translatorisch bewegbar. In der hier linken Darstellung in Fig. 5A sind die Keilelemente 7 nur geringfügig zwischen den Pumpeinheiten 2a, 2b und der darüber befindlichen Einstelleinrichtung 3 mit einer Exzenterachse 3d eingeschoben. Auf der im Gehäuse 8 (hier nicht dargestellt) gelagerten Exzenterachse 3d ist ein Exzenter 3a für die Pumpeinheit 2a und ein um 180° versetzt ausgerichteter Exzenter 3b für die Pumpeinheit 2b vorgesehen, wobei diese mit einem mittleren Einstellrad 3c drehbar sind, um die untereinander dargestellten Positionen einzunehmen, so dass das Mischungsverhältnis in der oberen Reihe 0:100, in der mittleren Reihe 100:0 und in der unteren Reihe 50:50 betragen soll. In Fig. 5B ist die dazu entsprechende, jeweilige Pump- oder Betätigungsstellung eingezeichnet.

Die Einstellung der Mischung erfolgt somit durch einfaches Verdrehen der Exzenterachse 3d der Einstelleinrichtung 3. Die Betätigung erfolgt hier durch einfaches Einschieben der Keilelemente 7 mit einem Ziehgriff 7c am spitzen Ende der Keilelemente 7 im Bereich der Filmscharniere 7a, wobei der Ziehgriff 7c am Außenumfang des Gehäuses 8 hervorragt. In Umkehrung hierzu könnte am entgegengesetzten, hohen Ende der Keilelemente 7 auch ein Druckknopf vorgesehen sein (nicht dargestellt). In beiden Fällen ist auch eine Rückstellfeder zum Zurückschieben der beiden Keilelemente 7 in die Ausgangsstellung nach Fig. 5A vorgesehen (hier nicht dargestellt). Für das Einstellrad 3c können beispielsweise dort auch Markierungen vorgesehen sein, die mit einer Skala in Überdeckung gebracht werden, um ein vorbestimmtes Dosierverhältnis (z.B. 35: 65) einzustellen. Diese Ausführung mit den Exzentern 3a, 3b erlaubt ein stufenloses Einstellen des Mischungsverhältnis, wobei aber auch eine abgestufte Gestaltung möglich ist.

### Bezugszeichenliste:

1 = Spender
2a, b = Pumpeinheit
3 = Einstelleinrichtung
3a, b = Exzenter
3c = Drehrad
3d = Exzenterachse
4 = Betätigungseinrichtung
4a, 4b Nuten
4c = Rastverbindung
5 = Spenderdüse
6a, 6b = Behälter
6a', 6b' = Stößel
7 = Keilelement
7a = Filmschamier
7b = Rückstellfeder
7c = Ziehgriff
8 = Gehäuse

## Patentansprüche

1. Spender für die Abgabe einer aus wenigstens zwei Komponenten bestehenden Substanz, umfassend:
wenigstens zwei Behälter (6a, 6b) für die Aufnahme der Komponenten der Substanz;
eine Einstelleinrichtung (3), mit der das Mengenverhältnis der Komponenten der Substanz einstellbar ist, wobei benachbart zur Einstelleinrichtung (3) rampenförmig angeordnete Keilelemente (7) vorgesehen sind,
eine bewegliche Betätigungseinrichtung (4); und
eine Spenderdüse (5) für die von dem Spender (1) abzugebende Substanz,
**dadurch gekennzeichnet, dass**
eine Pumpeinheit (2a, 2b) an jedem der Behälter (6a, 6b) vorgesehen ist und jeder Pumpeneinheit (2a, 2b) bzw. jedem Behälter (6a, 6b) mindestens ein Keilelement (7) zugeordnet ist zur Betätigung der Pumpeneinheiten (2a, 2b) bzw. Behälter (6a, 6b).

2. Spender nach Anspruch 1, **dadurch gekennzeichnet, dass**
die Keilelemente (7) gegenüber den Pumpeinheiten (2a, 2b) bzw. Behältern (6a, 6b) verschwenkbar oder verschiebbar angeordnet sind.

3. Spender nach Anspruch 1 oder 2, **dadurch gekennzeichnet, dass** die Keilelemente (7) direkt oder indirekt durch die Betätigungseinrichtung (4) verdrehbar sind.

4. Spender nach einem der Ansprüche 1 bis 3, **dadurch gekennzeichnet, dass** die Einstelleinrichtung (3) oberhalb der Betätigungseinrichtung (4) verdrehbar ist.

5. Spender nach einem der Ansprüche 1 bis 4, **dadurch gekennzeichnet, dass** die Keilelemente (7) an ihren spitzen Enden Filmscharniere (7a) aufweisen.

6. Spender nach einem der Ansprüche 1 bis 5, **dadurch gekennzeichnet, dass** die Einstelleinrichtung (3) stufenlos verdrehbar ausgebildet ist oder eine Vielzahl von Rastpositionen zur definierten Verdrehung der Einstelleinrichtung (3) aufweist.

7. Spender nach einem der Ansprüche 1 bis 6, **dadurch gekennzeichnet, dass** die Keilelemente (7) im Querschnitt L-förmig ausgebildet sind.

8. Spender nach einem der Ansprüche 1 bis 7, **dadurch gekennzeichnet, dass** die Pumpeinheiten (2a, 2b) benachbart zur Spenderdüse (5) angeordnet sind.

9. Spender nach einem der Ansprüche 1 bis 8, **dadurch gekennzeichnet, dass** die Betätigungseinrichtung (4) im wesentlichen ringförmig als Drehhülse (Fig. 1 - 4) oder als Ziehgriff (7c) (Fig. 5) ausgebildet ist.

10. Spender nach einem der Ansprüche 1 bis 9, **dadurch gekennzeichnet, dass** die Keilelemente (7) mit einer Exzenterachse (3d) der Einstelleinrichtung (3) zusammenwirken.

11. Spender nach einem der Ansprüche 1 bis 10, **dadurch gekennzeichnet, dass** die Exzenterachse (3d) der Einstelleinrichtung (3) horizontal drehbar gelagert ist.

12. Spender nach einem der Ansprüche 1 bis 11, **dadurch gekennzeichnet, dass** der Winkel der Keilelemente (7) gegenüber den Pumpen (2a, 2b) bzw. Behältern über die Einstelleinrichtung (3) einstellbar ist.

13. Spender nach einem der Ansprüche 1 bis 12, **dadurch gekennzeichnet, dass** das Dosierverhältnis gegenläufig einstellbar ist.

14. Spender nach einem der Ansprüche 1 bis 13 **dadurch gekennzeichnet, dass** die Keilelemente (7) bzw. das Betätigungselement (4) nach dem Betätigen durch eine Rückstellfeder (7b), insbesondere eine Torsionsfeder zurückstellbar sind/ist.

## Claims

1. A dispenser for discharging a substance consisting of at least two components, comprising:
at least two containers (6a, 6b) for receiving the components of the substance;
an adjusting device (3) with which the quantity ratio of the components of the substance can be adjusted, wherein adjacent to the adjusting device (3), wedge elements (7) are provided which are arranged in shape of a ramp,
a movable actuating device (4); and
a dispenser nozzle (5) for the substance to be discharged by the dispenser (1) **characterized in that**
a pump unit (2a, 2b) is provided at each of the containers (6a, 6b) and that at least one wedge element (7) is assigned to each pump unit (2a, 2b) or container (6a, 6b), respectively, for actuating the pump units (2a, 2b) or containers (6a, 6b), respectively.

2. The dispenser according to claim 1, **characterized in that**
the wedge elements (7) are arranged in a pivotable or moveable manner towards the pump units (2a, 2b) or containers (6a, 6b), respectively.

3. The dispenser according to claim 1 or 2, **characterized in that**
the wedge elements (7) are twistable directly or indirectly through the actuating device (4).

4. The dispenser according to one of the claims 1 to 3, **characterized in that** the adjusting device (3) is twistable above the actuating device (4).

5. The dispenser according to one of the claims 1 to 4, **characterized in that** the wedge elements (7) have film hinges (7a) at their pointed ends.

6. The dispenser according to one of the claims 1 to 5, **characterized in that** the adjusting device (3) is configured continuously twistably or has a variety of snap positions for the defined twisting of the adjusting device (3).

7. The dispenser according to one of the claims 1 to 6, **characterized in that** the wedge elements (7) have an L-shaped configuration in their cross section.

8. The dispenser according to one of the claims 1 to 7, **characterized in that** the pump units (2a, 2b) are arranged adjacent to the dispenser nozzle (5).

9. The dispenser according to one of the claims 1 to 8, **characterized in that** the adjusting device (4) is essentially ring-shaped as a rotating sleeve (figs. 1-4) or configured as a pull handle (7c) (fig. 5).

10. The dispenser according to one of the claims 1 to 9, **characterized in that** the wedge elements (7) interact with an eccentric axis (3d) of the adjusting device (3).

11. The dispenser according to one of the claims 1 to 10, **characterized in that** the eccentric axis (3d) of the adjusting device (3) is mounted horizontally twistably.

12. The dispenser according to one of the claims 1 to 11, **characterized in that** the angle of the wedge elements (7) towards the pumps (2a, 2b) or the containers, respectively, can be adjusted via the adjusting device (3).

13. The dispenser according to one of the claims 1 to 12, **characterized in that** the dosing ratio can be adjusted in a counter-rotating way.

14. The dispenser according to one of the claims 1 to 13, **characterized in that** the wedge elements (7) or the actuating element (4) can be returned after actuation by means of a return spring (7b), particularly a torsion spring.

## Revendications

1. Distributeur pour la distribution d'une substance constituée d'au moins deux composants, comprenant :
au moins deux réservoirs (6a, 6b) pour la réception des composants de la substance ;
un dispositif de réglage (3) au moyen duquel le rapport quantitatif des composants de la substance est réglable, dans lequel distributeur des éléments en forme de coin (7) disposés en forme de rampe de manière avoisinante au dispositif de réglage (3) sont ménagés,
un dispositif d'actionnement (4) mobile ; et
une buse de distribution (5) pour la substance à distribuer par le distributeur (1),
**caractérisé en ce qu'**
une unité de pompage (2a, 2b) est ménagée sur chaque réservoir (6a, 6b) et **en ce qu'**au moins un élément en forme de coin (7) est associé à chaque unité de pompage (2a, 2b) et à chaque réservoir (6a, 6b) pour l'actionnement des unités de pompage (2a, 2b) et des réservoirs (6a, 6b).

2. Distributeur selon la revendication 1, **caractérisé en ce que**
les éléments en forme de coin (7) sont disposés de manière pivotante ou coulissante par rapport aux unités de pompage (2a, 2b) et aux réservoirs (6a, 6b).

3. Distributeur selon la revendication 1 ou 2, **caractérisé en ce que**
les éléments en forme de coin (7) peuvent être tournés directement ou indirectement au moyen du dispositif d'actionnement (4).

4. Distributeur selon l'une quelconque des revendications 1 à 3, **caractérisé en ce que** le dispositif de réglage (3) peut être tourné au-dessus du dispositif d'actionnement (4).

5. Distributeur selon l'une quelconque des revendications 1 à 4, **caractérisé en ce que** les éléments en forme de coin (7) présentent des charnières à film (7a) sur leurs extrémités pointues.

6. Distributeur selon l'une quelconque des revendications 1 à 5, **caractérisé en ce que** le dispositif de réglage (3) est réalisé de manière à pouvoir être tourné progressivement ou présente une pluralité de positions à crans pour la rotation définie du dispositif de réglage (3).

7. Distributeur selon l'une quelconque des revendications 1 à 6, **caractérisé en ce que** les éléments en forme de coin (7) sont réalisés en forme de L en section transversale.

8. Distributeur selon l'une quelconque des revendications 1 à 7, **caractérisé en ce que** les unités de pompage (2a, 2b) sont disposées de manière avoisinante à la buse de distribution (5).

9. Distributeur selon l'une quelconque des revendications 1 à 8, **caractérisé en ce que** le dispositif d'actionnement (4) est réalisé essentiellement de manière annulaire en tant que douille rotative (Fig. 1 à 4) ou en tant que poignée à tirer (7c) (Fig. 5).

10. Distributeur selon l'une quelconque des revendications 1 à 9, **caractérisé en ce que** les éléments en forme de coin (7) coopèrent avec un axe d'excentrique (3d) du dispositif de réglage (3).

11. Distributeur selon l'une quelconque des revendications 1 à 10, **caractérisé en ce que** l'axe d'excentrique (3d) du dispositif de réglage (3) est logé de manière horizontalement rotative.

12. Distributeur selon l'une quelconque des revendications 1 à 11, **caractérisé en ce que** l'angle des éléments en forme de coin (7) par rapport aux pompes (2a, 2b) et aux réservoirs est réglable par l'intermédiaire du dispositif de réglage (3).

13. Distributeur selon l'une quelconque des revendications 1 à 12, **caractérisé en ce que** le rapport de dosage est réglable de manière inverse.

14. Distributeur selon l'une quelconque des revendications 1 à 13, **caractérisé en ce que** les éléments en forme de coin (7), respectivement l'élément d'actionnement (4), peuvent/peut être remis en position initiale après l'actionnement au moyen d'un ressort de rappel (7b), notamment d'un ressort de torsion.
